(19) Europäisches Patentamt
European Patent Office
Office européen des brevets

(11) EP 4 790 163 A1

(12) EUROPEAN PATENT APPLICATION

(43) Date of publication:
**12.08.2026 Bulletin 2026/33**

(21) Application number: **25197424.2**

(22) Date of filing: **21.08.2025**

(51) International Patent Classification (IPC):
***C22C 38/02*** *(2006.01)* ***C22C 38/04*** *(2006.01)*
***C22C 38/06*** *(2006.01)* ***C22C 38/12*** *(2006.01)*
***C22C 38/16*** *(2006.01)* ***C22C 38/18*** *(2006.01)*

(52) Cooperative Patent Classification (CPC):
**C22C 21/02; B32B 15/012; C22C 38/002; C22C 38/02; C22C 38/04; C22C 38/06; C22C 38/20; C22C 38/24; C22C 38/32; C23C 2/022; C23C 2/12; C23C 2/28; C23C 2/29; C23C 2/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.02.2025 CN 202510138899**

(71) Applicant: **Xiaomi EV Technology Co., Ltd.**
**Beijing 100176 (CN)**

(72) Inventors:
- **ZHANG, Xingmeng**
  **Beijing, 100176 (CN)**
- **MA, Qiu**
  **Beijing, 100176 (CN)**
- **CHENG, Tianjie**
  **Beijing, 100176 (CN)**
- **CHEN, Zhong**
  **Beijing, 100176 (CN)**
- **LIU, Luchen**
  **Beijing, 100176 (CN)**
- **XING, Yubing**
  **Beijing, 100176 (CN)**
- **LV, Baofeng**
  **Beijing, 100176 (CN)**

(74) Representative: **Stöckeler, Ferdinand**
**Schoppe, Zimmermann, Stöckeler**
**Zinkler, Schenk & Partner mbB**
**Patentanwälte**
**Radlkoferstrasse 2**
**81373 München (DE)**

# (54) STEEL SHEET SUBSTRATE AND STEEL SHEET WITH PRE-COATED LAYER, AND METHODS FOR MANUFACTURING THE SAME, HOT-STAMPING FORMED COMPONENT AND METHOD FOR MANUFACTURING THE SAME, AND AUTOMOTIVE STRUCTURAL COMPONENT

(57) Provided is a steel sheet substrate and a steel sheet with a pre-coated layer, and methods for manufacturing thereof, a hot-stamping formed component and a method for manufacturing thereof, and an automotive structural component. The steel sheet substrate includes 0.29 to 0.42 wt% of C, 0.50 to 0.90 wt% of Si, 0.30 to 0.70 wt% of Mn, 0.10 wt% or less of P, 0.10 wt% or below of S, 0.01to 0.40 wt% of Cr, 0.001 to 0.01 wt% of B, 0.10 to 0.40 wt% of Al, 0.002 to 0.005 wt% of Mg, 0.10 to 0.30 wt% of Cu, 0.05 to 0.20 wt% of V, 0.10 wt% or less of an impurity, and a balance of Fe.

20μm

Fig.1

EP 4 790 163 A1

## Description

### TECHNICAL FIELD

The present invention generally relates to the field of automotive hot-stamping parts, and more particularly, to a steel sheet substrate and a steel sheet with a pre-coated layer, and methods for manufacturing the same, a hot-stamping formed component and a method for manufacturing the same, and an automotive structural component.

### BACKGROUND

The hot stamping process of ultra-high-strength steel has been increasingly applied to the design and manufacture of automotive structural components. However, for steel sheet, an increase in the strength is usually accompanied by a decrease in plasticity and toughness. Consequently, with its applications in the automotive field, problems caused by insufficient toughness and delayed cracking in hot-stamping formed components have attracted increasing attention from technicians. For example, some hot-stamping formed components experience brittle cracking during storage, processing, transportation, or welding after the hot stamping treatment. The cracking leads to the scrapping of parts or even the entire car body, which, in turn, leads to an increase in production costs. More seriously, delayed cracking of some hot-stamping formed components occurs only after the vehicle assembly is completed, thereby leading to an increased safety risks during vehicle operation. Therefore, it is necessary to ensure that the hot-stamping formed components are of sufficient toughness and resistance to delayed cracking when they are being used, especially when their tensile strength exceeds 1800 MPa.

### SUMMARY

According to a first aspect of embodiments of the present invention, there is provided a steel sheet substrate that includes 0.29 to 0.42 wt% of carbon (C), 0.50 to 0.90 wt% of silicon (Si), 0.30 to 0.70 wt% of manganese (Mn), 0.10 wt% or less of phosphorus (P), 0.10 wt% or less of sulphur (S), 0.01 to 0.40 wt% of chromium (Cr), 0.001 to 0.01 wt% of boron (B), 0.10 to 0.40 wt% of aluminum (Al), 0.002 to 0.005 wt% of magnesium (Mg), 0.10 to 0.30 wt% of copper (Cu), 0.05 to 0.20 wt% of Vanadium (V), 0.10 wt% or less of an impurity, and a balance of iron (Fe).

According to a second aspect of embodiments of the present invention, there is provided a method for manufacturing a steel sheet with a pre-coated layer, including steps: S1, subjecting a steel sheet substrate according to the first aspect of embodiments of the present invention to an annealing treatment to obtain a first product; and S2, cooling the first product and performing a hot-dip coating treatment for the cooled first product in a coating solution.

According to a third aspect of embodiments of the present invention, there is provided a steel sheet with a pre-coated layer manufactured by a method according to the second aspect of embodiments of the present invention.

According to a forth aspect of embodiments of the present invention, there is provided a method for manufacturing a hot-stamping formed component, including: subjecting a steel sheet with a pre-coated layer according to the third aspect of embodiments of the present invention to a hot stamping treatment.

According to a fifth aspect of embodiments of the present invention, there is provided a hot-stamping formed component manufactured by a method according to the forth aspect of embodiments of the present invention.

According to a sixth aspect of embodiments of the present invention, there is provided an automotive structural component including a hot-stamping formed component according to the fifth aspect of embodiments of the present invention.

Other features and advantages of the present invention will be illustrated in detail in the following detailed description.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.

Fig. 1 is a microstructure photograph of a dislocation-structured martensite of a hot-stamped steel sheet manufactured according to example 1 of the present invention.

Fig. 2 shows a stress-strain curve of the hot-stamped steel sheet manufactured according to examples 1, 2, and 9 of the present invention.

Fig. 3 shows a load-displacement curve of the hot-stamped steel sheet manufactured according to examples 1, 2, and 9 of the present invention.

## DETAILED DESCRIPTION

Specific embodiments of the present invention are illustrated in detail below with reference to the drawings. It is to be understood that the specific description described herein are exemplary and explanatory only and are not restrictive of the present invention.

It is an object of the present invention to provide a steel sheet substrate and a steel sheet with a pre-coated layer, and methods for manufacturing the same, a hot-stamping formed component and a method for manufacturing the same, and an automotive structural component, which are of high strength, sufficient toughness and resistance to delayed cracking, while meeting requirement of lightweight car body.

According to a first aspect of embodiments of the present invention, there is provided a steel sheet substrate that includes 0.29 to 0.42 wt% of carbon (C), 0.50 to 0.90 wt% of silicon (Si), 0.30 to 0.70 wt% of manganese (Mn), 0.10 wt% or less of phosphorus (P), 0.10 wt% or less of sulphur (S), 0.01 to 0.40 wt% of chromium (Cr), 0.001 to 0.01 wt% of boron (B), 0.10 to 0.40 wt% of aluminum (Al), 0.002 to 0.005 wt% of magnesium (Mg), 0.10 to 0.30 wt% of copper (Cu), 0.05 to 0.20 wt% of Vanadium (V), 0.10 wt% or less of an impurity, and a balance of iron (Fe).

In some embodiments, the steel sheet substrate includes 0.32 to 0.38 wt% of C, 0.70 to 0.90 wt% of Si, 0.30 to 0.50 wt% of Mn, 0.10 wt% or less of P, 0.10 wt% or less of S, 0.01 to 0.20 wt% of Cr, 0.001 to 0.01 wt% of B, 0.10 to 0.40 wt% of Al, 0.002 to 0.003 wt% of Mg, 0.22 to 0.30 wt% of Cu, 0.05 to 0.20 wt% of V, 0.10 wt% or less of the impurity, and a balance of Fe.

In some embodiments, a total content of Si and Cr in the steel sheet substrate is 0.7 wt% or above.

In some embodiments, the steel sheet substrate is of an Ms temperature ≥ 335 calculated according to Formula (1) as below:

$$Ms=500-320\times[C]-50\times[Mn]-30\times[Cr]-5\times([Cu]+[Si]) \qquad \text{Formula (1)},$$

wherein in the Formula (1), [C] represents a content of C in the steel sheet substrate by wt%; [Mn] represents a content of Mn in the steel sheet substrate by wt%; [Cr] represents a content of Cr in the steel sheet substrate by wt%; [Cu] represents a content of Cu in the steel sheet substrate by wt%; and [Si] represents a content of Si in the steel sheet substrate by wt%.

In some embodiments, the steel sheet substrate is of the Ms temperature ≥ 345.

According to a second aspect of embodiments of the present invention, there is provided a method for manufacturing a steel sheet with a pre-coated layer, including steps: S1, subjecting a steel sheet substrate according to the first aspect of embodiments of the present invention to an annealing treatment to obtain a first product; and S2, cooling the first product and performing a hot-dip coating treatment for the cooled first product in a coating solution.

In some embodiments, in the step S1, the annealing treatment is performed at an annealing temperature of 780°C to 830°C and a dew point of -30°C to -20°C for a soaking time of 25 to 35 seconds.

In some embodiments, in the step S2, the coating solution includes: 9 to 12 wt% of Si, 2 to 3 wt% of Fe, 0.10 wt% or less of an impurity, and a balance of Al;

the hot-dip coating treatment is performed on the cooled first product having a temperature of 600°C to 680°C in the coating solution at 650°C to 700°C for a hot-dip coating period of 2 to 15 seconds;
a coated layer obtained from the hot-dip coating treatment is of a thickness of 6 to 16 μm.

According to a third aspect of embodiments of the present invention, there is provided a steel sheet with a pre-coated layer manufactured by a method according to the second aspect of embodiments of the present invention.

According to a forth aspect of embodiments of the present invention, there is provided a method for manufacturing a hot-stamping formed component, including f: subjecting a steel sheet with a pre-coated layer according to the third aspect of embodiments of the present invention to a hot stamping treatment.

In some embodiments, the hot stamping treatment is performed at conditions including: a heating temperature between 880°C to 940°C, a heating period of 180 to 240 seconds, a hot-forming temperature between 680°C to 720°C, a pressure-holding period of 8 to 10 seconds, a cooling rate of 40°C/s to 60°C/s after the hot stamping treatment, and an ejection temperature of 200°C or below.

According to a fifth aspect of embodiments of the present invention, there is provided a hot-stamping formed component manufactured by a method according to the forth aspect of embodiments of the present invention.

In some embodiments, the hot-stamping formed component is of a yield strength ≥ 1250 MPa, a tensile strength ≥ 2000 MPa, a ratio of elongation ≥ 5%, and a VDA (Verband der Automobilindustrie ) ≥ 40°.

According to a sixth aspect of embodiments of the present invention, there is provided an automotive structural component including a hot-stamping formed component according to the fifth aspect of embodiments of the present invention.

There is provided steel sheet substrate and a steel sheet with a pre-coated layer, and methods for manufacturing the same, a hot-stamping formed component and a method for manufacturing the same, and an automotive structural component in the embodiments of the present invention by the aforementioned technical solutions. The steel sheet substrate is a dislocation-structured martensite substrate, which avoids the formation of numerous microfine twin substructures, as well as from which the obstruction of dislocation and the severe lattice distortion resulted, in twinned martensite, thereby preventing the problem of poor toughness of twinned martensite, so that said steel sheet substrate can be of high strength with good toughness and resistance to delayed cracking at the same time. The hot-stamping formed component manufactured from the steel sheet substrate provided in embodiments of the present invention can be of high strength, sufficient toughness and resistance to delayed cracking, thereby exhibiting good performance in application to the automotive structural components.

According to a first aspect of embodiments of the present invention, there is provided a steel sheet substrate that includes 0.29 to 0.42 wt% of carbon (C), 0.50 to 0.90 wt% of silicon (Si), 0.30 to 0.70 wt% of manganese (Mn), 0.10 wt% or less of phosphorus (P), 0.10 wt% or less of sulphur (S), 0.01 to 0.40 wt% of chromium (Cr), 0.001 to 0.01 wt% of boron (B), 0.10 to 0.40 wt% of aluminum (Al), 0.002 to 0.005 wt% of magnesium (Mg), 0.10 to 0.30 wt% of copper (Cu), 0.05 to 0.20 wt% of Vanadium (V), 0.10 wt% or less of an impurity, and a balance of iron (Fe).

There is provided a steel sheet substrate in embodiments of the present invention. The steel sheet substrate is a dislocation-structured martensite substrate, which avoids the formation of numerous microfine twin substructures, as well as from which the obstruction of dislocation and the severe lattice distortion resulted, in twinned martensite, thereby preventing the problem of poor toughness of twinned martensite, so that said steel sheet substrate can be of high strength with good toughness and resistance to delayed cracking at the same time. The hot-stamping formed component manufactured from the steel sheet substrate provided in embodiments of the present invention can be of high strength, sufficient toughness and resistance to delayed cracking, thereby exhibiting good performance in application to the automotive structural components.

According to embodiments of the present invention, C is a cost-effective element for enhancing steel strength. However, though excessive C content may increase the steel strength, it may also promote the formation of twinned martensite and further deteriorate the structure toughness of the steel sheet finally manufactured. Therefore, the C content is controlled within a range of 0.29 to 0.42 wt% in embodiments of the present invention, enabling the steel sheet substrate to achieve a tradeoff of strength and toughness.

According to embodiments of the present invention, a martensite start temperature of phase transformation (abbreviated as "an Ms temperature") of the steel sheet substrate is increased to cope with the toughness decrease caused by the high C content. The higher Ms temperature, the more significant the auto-tempering effect in the produced martensite. Tempering of martensite eliminates or reduces an internal stress - as a quenched steel component usually exhibits high hardness but excessive brittleness and poor plasticity. With an auto-tempering after the hot stamping, the brittleness of the steel sheet substrate provided in embodiments of the present invention is reduced and the plasticity and toughness are improved, thereby enhancing the safety and reliability of components during service while mitigating the high stresses resulted from martensite formation. Consequently, in embodiments of the present invention, respective contents of Mn, Cr, Cu, and Si are controlled to achieve a synergistic effect, and further elevating the Ms temperature of the steel sheet substrate and activating its auto-tempering capability without additional tempering treatment and thereby simplifying the process.

According to embodiments of the present invention, the addition of a trace amount (0.002 to 0.005 wt%) of Mg to the steel sheet substrate contributes to the grain refinement on the one hand, and to modifying the morphology of inclusions to be more round on the other hand, thereby enhancing the ductility and toughness of the steel sheet substrate. The formation of more rounded and uniformly distributed MgS and MgO particles reduces the amount of unfavorable FeS, thereby improving the ductility and toughness of the steel sheet substrate.

According to embodiments of the present invention, the addition of 0.10 to 0.30 wt% Cu to the steel sheet substrate both expands the austenite region and facilitates the precipitation of a copper-rich phase, whose high hydrogen trapping binding energy enabling them to capture hydrogen atoms, thereby reducing the risk of hydrogen embrittlement, and additionally improving toughness of the steel sheet substrate.

In an embodiment, the steel sheet substrate includes 0.32 to 0.38 wt% of C, 0.70 to 0.90 wt% of Si, 0.30 to 0.50 wt% of Mn, 0.10 wt% or less of P, 0.10 wt% or less of S, 0.01 to 0.20 wt% of Cr, 0.001 to 0.01 wt% of B, 0.10 to 0.40 wt% of Al, 0.002 to 0.003 wt% of Mg, 0.22 to 0.30 wt% of Cu, 0.05 to 0.20 wt% of V, 0.10 wt% or less of the impurity, and a balance of Fe. The steel sheet substrate having the indicated respective contents of components provided in embodiments of the present invention may be of higher strength and toughness.

In an embodiment, a total content of Si and Cr in the steel sheet substrate is 0.7 wt% or above, in a further embodiment, 1 wt% or above. The total content of Si and Cr controlled within the indicated range of the present embodiment can increase the strength and toughness of the steel sheet substrate.

In an embodiment, the steel sheet substrate is of an Ms temperature $\geq 335$ calculated according to Formula (1) as below:

$$Ms=500-320\times[C]-50\times[Mn]-30\times[Cr]-5\times([Cu]+[Si]) \quad \text{Formula (1)},$$

wherein in the Formula (1), [C] represents a content of C in the steel sheet substrate by wt%; [Mn] represents a content of Mn in the steel sheet substrate by wt%; [Cr] represents a content of Cr in the steel sheet substrate by wt%; [Cu] represents a content of Cu in the steel sheet substrate by wt%; and [Si] represents a content of Si in the steel sheet substrate by wt%. By research, the inventors of the present invention have found that when the Ms temperature calculated according to Formula (1) using respective contents of components in the steel sheet substrate is 335°C or above, the steel sheet substrate has a better auto-tempering effect during the hot stamping process. With the increase of the Ms temperature, the self-tempering performance of the steel sheet substrate is correspondingly improved, which contributes to obtaining a hot stamped steel sheet with high-strength, excellent plasticity and good toughness.

In an embodiment, the steel sheet substrate is of the Ms temperature ≥ 345,thereby improving the strength and toughness of the hot stamped steel sheet substrate.

In a specific embodiment, said steel sheet substrate may be manufactured by a conventional process in the art.

According to a second aspect of embodiments of the present invention, there is provided a method for manufacturing a steel sheet with a pre-coated layer, including steps: S1, subjecting a steel sheet substrate according to the first aspect of embodiments of the present invention to an annealing treatment to obtain a first product; and S2, cooling the first product and performing a hot-dip coating treatment for the cooled first product in a coating solution.

The present invention provides in embodiments a method for manufacturing a steel sheet with a pre-coated layer. The method firstly employs the annealing treatment to obtain the first product having an initial low-carbon zone, favoring a subsequent coating process; subsequently, a hot dip coating treatment is performed to introduce a coated layer with oxidation resistance and corrosion resistance onto the surface of the steel sheet substrate.

In an embodiment, prior to performing the annealing treatment in step S1, the method further includes:
subjecting the steel sheet substrate to pre-degreasing, electrolytic degreasing, brushing, rinsing, and drying in a cleaning section, so that over 90% of oil and iron powder on the surface of the steel sheet substrate are removed. The cleaned steel sheet substrate is then subjected to the annealing treatment, where the annealing treatment may be performed in a vertical continuous annealing furnace.

In an embodiment, in the step S1, the annealing treatment is performed at an annealing temperature of 780°C to 830°C and a dew point of -30°C to -20°C for a soaking time of 25 to 35 seconds. In a further embodiment, the annealing treatment is performed at an annealing temperature of 790°C to 820°C and a dew point of -28°C to -22°C for a soaking time of 28 to 32 s. Accordingly, the annealing treatment performed as indicated in the above embodiments facilitates to obtaining a hot-stamped steel sheet with higher strength and toughness.

In an embodiment, in the step S2, the coating solution includes: 9 to 12 wt% of Si, 2 to 3 wt% of Fe, 0.10 wt% or less of an impurity, and a balance of Al. In a further embodiment, the coating solution includes: 10 to 11 wt% of Si, 2.5 to 3.0 wt% of Fe, 0.10 wt% or less of an impurity, and a balance of Al. The steel sheet substrate with use of the coating solution provided in this embodiment is of better corrosion resistance.

In an embodiment, the hot stamping treatment is performed on the cooled first product having a temperature of 600°C to 680°C in the coating solution at 650°C to 700°C for a hot-dip coating period of 2 to 15 seconds. In a further embodiment, the hot stamping treatment is performed on the cooled first product having a temperature of 620°C to 670°C in the coating solution at 660°C to 690°C for a hot-dip coating period of 5 to 10 s. The first product may be cooled by conventional rapid cooling and/or slow cooling approach. When the hot dip coating treatment is performed as indicated in the above embodiments, it may be helpful to enhance the coating quality.

In a specific embodiment, the method further includes following steps after step S2:

S3, removing excess coating solution on at least one surface of the steel sheet substrate by wiping with a gas knife to control the thickness of the coated layer on the at least one surface,
after the leaving of the steel sheet substrate from the coating solution and before the solidification of the coating solution on the at least one surface of the steel sheet substrate,
where the gas knife may employ conventional process in the art;
S4, subjecting the strip steel (i.e., the steel sheet substrate) from the loop to a skin-pass rolling and a tension leveling, followed by an application of a passivation solution via a roll coater;
drying the strip steel coated with the passivation solution with a hot air; subjecting the strip steel to surface quality inspection on horizontal and vertical inspection tables; subjecting the strip steel to oil coating in an oiler, and then subjecting the strip steel to a shear-cut sampling by a flying shear; and finally coiling the strip steel by a downcoiler. After packaging, the product is warehoused.

In a specific embodiment, the coated layer obtained from the hot dip coating treatment is of a thickness of 6 to 16 μm, which exhibits good oxidation resistance and corrosion resistance.

According to a third aspect of embodiments of the present invention, there is provided a steel sheet with a pre-coated layer manufactured by a method according to the second aspect of embodiments of the present invention.

According to a forth aspect of embodiments of the present invention, there is provided a method for manufacturing a hot-stamping formed component, including: subjecting a steel sheet with a pre-coated layer according to the third aspect of embodiments of the present invention to a hot stamping treatment.

In an embodiment, the hot stamping treatment is performed at conditions including: a heating temperature between 880°C to 940°C, specifically 900°C to 930°C, a heating period of 180 to 240 seconds, a hot-forming temperature between 680°C to 720°C, a pressure-holding period of 8 to 10 seconds, a cooling rate of 40°C/s to 60°C/s after the hot stamping treatment, and an ejection temperature of 200°C or below. When the hot dip coating treatment is performed according to the process conditions of the present embodiment, it may be helpful to enhance the performance of the hot stamped steel sheet.

According to a fifth aspect of embodiments of the present invention, there is provided a hot-stamping formed component manufactured by a method according to the forth aspect of embodiments of the present invention.

In a specific embodiment, the hot-stamping formed component is of a yield strength ≥ 1250 MPa, a tensile strength ≥ 2000 MPa, a ratio of elongation ≥ 5%, and a VDA ≥ 40°. In a further specific embodiment, a yield strength ≥ 1350 MPa, a tensile strength ≥ 2100 MPa, a ratio of elongation ≥ 6%, and a VDA ≥ 45°.

In a specific embodiment, the coated layer of the hot-stamping formed component is of a thickness of 10 to 25 μm, which has good oxidation resistance and corrosion resistance.

According to a sixth aspect of embodiments of the present invention, there is provided an automotive structural component including a hot-stamping formed component according to the fifth aspect of embodiments of the present invention.

In a specific embodiment, the automotive structural components include, but are not limited to, safety structural parts such as a left/right anti-collision bar (beam) of a front/rear door, front/rear bumper, an A-pillar reinforcement panel, a B-pillar reinforcement panel, a C-pillar reinforcement panel, a middle channel, and a roof reinforcement beam. They may also be applied to the manufacturing of battery enclosures for new energy vehicles.

This embodiment of the present invention will be further illustrated in detail through the following examples. All raw materials used in the examples are commercially available.

The microstructure photograph of the martensitic microstructure of the hot-stamped steel sheet were obtained using a ZEISS-LAB A1.MAT microscope (Germany).

**Example 1**

(1) The steel sheet substrate, whose compositions were listed in Table 1, was subjected to pre-degreasing, electrolytic degreasing, brushing, rinsing, and drying in a cleaning section, so that over 90% of oil and iron powder on the surface were removed. The cleaned substrate was then fed into a vertical continuous annealing furnace and preheated and heated to the target annealing temperature of 800°C and a dew point of -22°C, followed by soaking for 30 s, thereby forming an initial low-carbon zone for the steel sheet with the pre-coated layer to obtain the first product.

(2) The first product was subjected to slow or rapid cooling down to a temperature of 670°C and then was immersed into a coating solution at 680°C for a hot-dip coating period of 10 s. The coating solution included 10.4 wt% of Si, 2.6 wt% of Fe, ≤ 0.10 wt% of an impurity, and a balance of Al.

(3) Cooling: The excess coating solution on at least one surface of the steel sheet substrate was removed by wiping with a gas knife to control the thickness of the coated layer on the at least one surface, after the leaving of the steel sheet substrate from the coating solution and before the solidification of the coating solution on the at least one surface of the steel sheet substrate, where the coated layer was controlled to be of a thickness of 6 to 16 μm.

(4) Oiling: The strip steel from the loop was subjected to a skin-pass rolling and a tension leveling, followed by an application of a passivation solution via a roll coater. The strip steel coated with the passivation solution was dried with a hot air. The strip steel was subjected to surface quality inspection on horizontal and vertical inspection tables and to oil coating in an oiler, and to a shear-cut sampling by a flying shear; and finally was coiled by a downcoiler. After packaging, the steel sheet with the pre-coated layer was warehoused.

(5) Hot stamping: The steel sheet with the pre-coated layer was hot-stamped at the following conditions including: a heating temperature of 920°C for a heating period of 230 s, a hot-forming temperature of 700°C with a pressure-holding period of 9 s, a cooling rate of 50°C/s after the hot stamping, and an ejection temperature of 180°C. The hot-stamped component was obtained. The coated layer is of thickness of 10 to 25 μm.

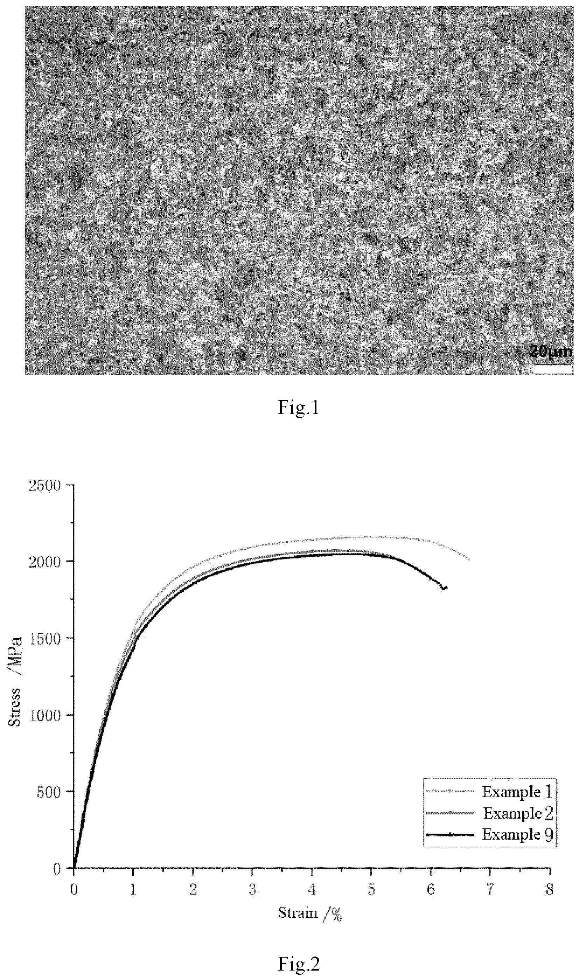

The microstructure photograph of a martensite of a hot-stamped steel sheet manufactured according to this example was shown as Fig. 1. It is observed that the martensite of the hot-stamped steel sheet manufactured according to

the present invention is a dislocation-structured martensite.

**Examples 2-9**

The steel sheet substrate was manufactured according to the method of Example 1, except that the chemical composition of said steel sheet substrate was modified as specified in Table 1. All other processes remained identical to Example 1.

**Comparative Examples 1-5**

The steel sheet substrate was manufactured according to the method of Example 1, except that the chemical composition of said steel sheet substrate was modified as specified in Table 1. All other processes remained identical to Example 1.

Table 1

| NO. | | C | Si | Mn | P | S | Cr | B | Al | Mg | Cu | V | Ms | Si+Cr |
|---|---|---|---|---|---|---|---|---|---|---|---|---|---|---|
| Example | 1 | 0.36 | 0.87 | 0.35 | 0.02 | 0.04 | 0.14 | 0.005 | 0.24 | 0.0025 | 0.24 | 0.09 | 357.6 | 1.01 |
| | 2 | 0.38 | 0.89 | 0.49 | 0.02 | 0.04 | 0.19 | 0.005 | 0.24 | 0.028 | 0.29 | 0.09 | 342.3 | 1.08 |
| | 3 | 0.40 | 0.87 | 0.35 | 0.02 | 0.04 | 0.14 | 0.005 | 0.24 | 0.0025 | 0.24 | 0.09 | 344.8 | 1.01 |
| | 4 | 0.36 | 0.58 | 0.35 | 0.02 | 0.04 | 0.14 | 0.005 | 0.24 | 0.0025 | 0.24 | 0.09 | 359.0 | 0.72 |
| | 5 | 0.36 | 0.87 | 0.53 | 0.02 | 0.04 | 0.14 | 0.005 | 0.24 | 0.0025 | 0.24 | 0.09 | 348.6 | 1.01 |
| | 6 | 0.36 | 0.87 | 0.35 | 0.02 | 0.04 | 0.21 | 0.005 | 0.24 | 0.0025 | 0.24 | 0.09 | 355.5 | 1.08 |
| | 7 | 0.36 | 0.87 | 0.35 | 0.02 | 0.04 | 0.14 | 0.005 | 0.24 | 0.004 | 0.24 | 0.09 | 357.6 | 1.01 |
| | 8 | 0.36 | 0.87 | 0.35 | 0.02 | 0.04 | 0.14 | 0.005 | 0.24 | 0.0025 | 0.12 | 0.09 | 358.2 | 1.01 |
| | 9 | 0.40 | 0.58 | 0.53 | 0.02 | 0.04 | 0.21 | 0.005 | 0.24 | 0.004 | 0.12 | 0.09 | 335.7 | 0.79 |
| Comparative | 1 | 0.30 | 0.27 | 1.45 | 0.015 | 0.008 | 0.05 | 0.0017 | 0.26 | - | - | 0.14 | 328.7 | 0.32 |
| | 2 | 0.28 | 0.28 | 1.24 | 0.019 | 0.006 | 0.25 | 0.0028 | 0.38 | - | - | 0.14 | 339.5 | 0.53 |
| | 3 | 0.31 | 0.33 | 1.79 | 0.014 | 0.005 | 0.26 | 0.0025 | 0.59 | - | - | 0.16 | 301.9 | 0.59 |
| | 4 | 0.33 | 0.15 | 1.60 | 0.013 | 0.009 | 0.24 | 0.0025 | 0.45 | - | - | 0.15 | 306.5 | 0.39 |
| | 5 | 0.36 | 0.87 | 0.35 | 0.02 | 0.04 | 0.14 | 0.005 | 0.24 | 0.001 | 0.03 | 0.09 | 358.6 | 1.01 |

In the table 1, all metallic component data were expressed in "weight %"; the balance of the steel sheet substrate in all Examples and Comparative Examples is Fe; A "-" indicated that this component was not added; the Ms temperatures were expressed in "°C".

**Test Example**

The resulting un-tempered hot-stamped flat sheet parts were subjected to tests for the tensile strength, the ratio of elongation, and the max bending angle, based on the GB/T 228.1 Tensile testing standard at room temperature and VDA 238 three-point bending test standard. The VDA angle was calculated based on the Appendix D methodology of VDA 238-100:2020. All data for hot-stamped steel sheets in Examples and Comparative Examples were averages of three test measurements to minimize experimental error. Test results were summarized in Table 2 below.

Table 2

| | Tensile Strength /MPa | Yield Strength /MPa | Ratio of Elongation /% | VDA/° |
|---|---|---|---|---|
| Example 1 | 1389 | 2156 | 6.1 | 45 |
| Example 2 | 1324 | 2069 | 5.5 | 42 |
| Example 3 | 1336 | 2075 | 5.5 | 42 |
| Example 4 | 1349 | 2138 | 6.0 | 44 |
| Example 5 | 1351 | 2144 | 5.8 | 43 |
| Example 6 | 1378 | 2141 | 5.9 | 44 |

(continued)

| | Tensile Strength /MPa | Yield Strength /MPa | Ratio of Elongation /% | VDA/° |
|---|---|---|---|---|
| Example 7 | 1374 | 2139 | 5.9 | 44 |
| Example 8 | 1387 | 2142 | 6.0 | 44 |
| Example 9 | 1312 | 2044 | 5.8 | 42 |
| Comparative 1 | 1243 | 1922 | 6.7 | 50 |
| Comparative 2 | 1311 | 1855 | 6.9 | 52 |
| Comparative 3 | 1236 | 1949 | 5.3 | 41 |
| Comparative 4 | 1302 | 1937 | 6.1 | 43 |
| Comparative 5 | 1309 | 1989 | 6.0 | 44 |

According to the data in Table 2, it can be seen that:
None of the steel sheet substrates employed in Comparative Examples 1 to 4 contained Mg and Cu, and respective contents of Si and Mn of the steel sheet substrates in Comparative Examples 1 and 3 to 4 fell out of the range provided in embodiments of the present invention, and their Ms temperatures fell out of the range provided in embodiments of the present invention. The respective contents of C, Si, and Mn of the steel sheet substrate in Comparative Example 2 fell out of the range provided in embodiments of the present invention; and the respective contents of Mg and Cu of the steel sheet substrate employed in the Comparative Example 5 fell out of within the range provided in embodiments of the present invention; the hot stamped steel sheets manufactured in Comparative Examples 1 to 2 and 4 to 5 were of a high rate of elongation and a VDA angle, but their yield strength and tensile strength were relatively low, for example, the tensile strength didn't reach to 2000 MPa; and the strength performance, the ratio of elongation, and the VDA angle of the hot stamped steel sheet manufactured in Comparative Example 3 were relatively low. It can be seen that the hot stamped steel sheets manufactured from the steel sheet substrates provided in Comparative Examples 1 to 5 were unable to realize the comprehensive performance of high strength, excellent plasticity and good toughness; compared with Comparative Examples 1 to 5, the hot stamped steel plates manufactured by using the steel sheet substrates in Examples 1 to 9 provided in the present invention were able to have higher strength performance (yield strength ≥1250 MPa, tensile strength ≥2000 MPa) and good toughness and plasticity (rate of elongation ≥5%, VDA ≥40°).

Comparing Example 1 with Example 2, it can be seen that the Ms temperature of the steel sheet substrate provided in Example 1 was within the indicated range provided in embodiments of the present invention (Ms temperature ≥ 345°C), and the hot stamped steel sheet manufactured in Example 1 exhibits better strength performance, and a higher rate of elongation and a greater VDA angle.

The all contents of the C, Si, Mn, Cr, Mg and Cu in the steel sheet substrates in Example 9, i.e. the 0.40 wt% of C, 0.58 wt% of Si, 0.53 wt% of Mn, 0.21 wt% of Cr, 0.004 wt% of Mg and 0.12 wt% of Cu, fell out of the defined ranges including 0.32 to 0.38 wt% of C, 0.70 to 0.90 wt% of Si, 0.30 to 0.50 wt% of Mn, 0.01 to 0.20 wt% of Cr, 0.002 to 0.003 wt% of Mg, and 0.22 to 0.30 wt% of Cu. The individual contents of the C, Si, Mn, Cr, Mg and Cu in the steel sheet substrates in Examples 3 to 8, i.e. 0.40 wt% of C in Example 3, 0.58 wt% of Si in Example 4, 0.53 wt% of Mn in Example 5, 0.21 wt% of Cr in Example 6, 0.004 wt% of Mg in Example 7, 0.12 wt% of Cu in Example 8, respectively, fell out of the defined ranges including 0.32 to 0.38 wt% of C, 0.70 to 0.90 wt% of Si, 0.30 to 0.50 wt% of Mn, 0.01 to 0.20 wt% of Cr, 0.002 to 0.003 wt% of Mg, and 0.22 to 0.30 wt% of Cu. It can be seen that, compared to the hot stamped steel sheet manufactured in Example 9, the hot stamped steel sheets manufactured in Example 3 to 8 exhibits better strength performance, and a higher rate of elongation and a greater VDA angle.

Further comparing Examples 3 to 8 with Example 1, it can be seen that the respective contents of the components of the steel sheet substrate used in Example 1 fell within the defined range including 0.32 to 0.38 wt% of C, 0.70 to 0.90 wt% of Si, 0.30 to 0.50 wt% of Mn, 0.10 wt% or less of P, 0.10 wt% or less of S, 0.01 to 0.20 wt% of Cr, 0.001 to 0.01 wt% of B, 0.10 to 0.40 wt% of Al, 0.002 to 0.003 wt% of Mg, 0.22 to 0.30 wt% of Cu, 0.05 to 0.20 wt% of V, 0.10 wt% or less of the impurity, and a balance of Fe provided in embodiments of the present invention, and the hot stamped steel sheets manufactured in Example 1 exhibits better strength performance, and a higher rate of elongation and a greater VDA angle.

The stress-strain curves of the hot stamped steel sheets manufactured in Examples 1 to 2 and Example 9 were shown in Fig. 2, and it can be seen from Fig. 2 that the hot stamped steel sheets manufactured from the steel sheet substrate in Example 1 was of higher strength while maintaining a good rate of elongation.

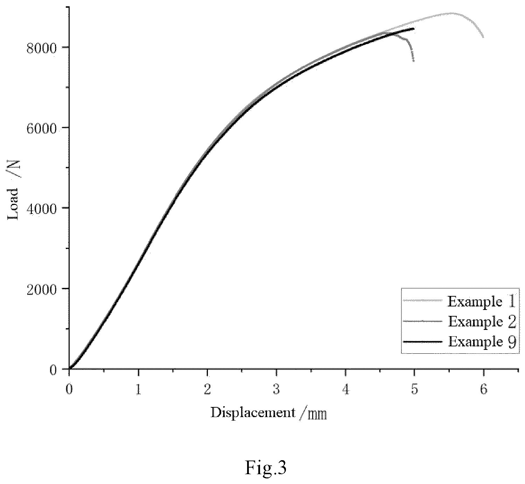

The load displacement curves of the hot stamped steel sheets manufactured in Examples 1 to 2 and Example 9 were shown in Fig. 3, and it can be seen from Fig. 3 that the hot stamped steel sheets manufactured from the steel sheet substrate in Example 1 was of a better bending angle, i.e., better toughness.

The specific embodiments of the present invention are described in detail above in connection with the

accompanying drawings, however, the present invention is not limited to the specific details of the above embodiments. Within the scope of the technical concept of the present invention, a variety of simple variations of the technical solutions of the present invention can be made, and all such simple variations fall within the protection scope of the present invention.

It is also to be noted that the various specific technical features described in the above specific embodiments may be combined in any suitable manner without contradiction. To avoid unnecessary repetition, the present invention will not separately illustrate the various possible combinations.

Furthermore, the various different embodiments of the present invention may also be combined arbitrarily, as long as such combination does not contradict the spirit of the present invention, it shall likewise be regarded to be content disclosed by the present invention.

## Claims

**1.** A steel sheet substrate, comprising:
0.29 to 0.42 wt% of carbon (C), 0.50 to 0.90 wt% of silicon (Si), 0.30 to 0.70 wt% of manganese (Mn), 0.10 wt% or less of phosphorus (P), 0.10 wt% or less of sulphur (S), 0.01to 0.40 wt% of chromium (Cr), 0.001 to 0.01 wt% of boron (B), 0.10 to 0.40 wt% of aluminum (Al), 0.002 to 0.005 wt% of magnesium (Mg), 0.10 to 0.30 wt% of copper (Cu), 0.05 to 0.20 wt% of Vanadium (V), 0.10 wt% or less of an impurity, and a balance of iron (Fe).

**2.** The steel sheet substrate of claim 1, comprising:
0.32 to 0.38 wt% of C, 0.70 to 0.90 wt% of Si, 0.30 to 0.50 wt% of Mn, 0.10 wt% or less of P, 0.10 wt% or below of S, 0.01 to 0.20 wt% of Cr, 0.001 to 0.01 wt% of B, 0.10 to 0.40 wt% of Al, 0.002 to 0.003 wt% of Mg, 0.22 to 0.30 wt% of Cu, 0.05 to 0.20 wt% of V, 0.10 wt% or less of the impurity, and a balance of Fe.

**3.** The steel sheet substrate of claim 1, wherein a total content of Si and Cr in the steel sheet substrate is 0.7 wt% or above.

**4.** The steel sheet substrate of claim 1, wherein the steel sheet substrate is of an Ms temperature ≥ 335 calculated according to Formula (1):

$$Ms=500-320\times[C]-50\times[Mn]-30\times[Cr]-5\times([Cu]+[Si]) \qquad \text{Formula (1)},$$

wherein in the Formula (1), [C] represents a content of C in the steel sheet substrate by wt%; [Mn] represents a content of Mn in the steel sheet substrate by wt%; [Cr] represents a content of Cr in the steel sheet substrate by wt%; [Cu] represents a content of Cu in the steel sheet substrate by wt%; and [Si] represents a content of Si in the steel sheet substrate by wt%.

**5.** The steel sheet substrate of claim 4, wherein the steel sheet substrate is of the Ms temperature ≥ 345.

**6.** The steel sheet substrate of claim 1, wherein the steel sheet substrate is a dislocation-structured martensite substrate.

**7.** A method for manufacturing a steel sheet with a pre-coated layer, comprising steps:

S1, subjecting a steel sheet substrate according to claim 1 to an annealing treatment to obtain a first product; and
S2, cooling the first product and performing a hot-dip coating treatment for the cooled first product in a coating solution.

**8.** The method of claim 7, wherein in step S1, the annealing treatment is performed at an annealing temperature of 780°C to 830°C and a dew point of -30°C to -20°C for a soaking time of 25 to 35 seconds.

**9.** The method of claim 7, wherein in step S2, the coating solution comprises: 9 to 12 wt% of Si, 2 to 3 wt% of Fe, 0.10 wt% or below of an impurity, and a balance of Al;

the hot-dip coating treatment is performed on the cooled first product having a temperature of 600°C to 680°C in the coating solution at 650°C to 700°C for a hot-dip coating period of 2 to 15 seconds;
a coated layer obtained from the hot-dip coating treatment is of a thickness of 6 to 16 μm.

**10.** A steel sheet with a pre-coated layer manufactured by the method according to claim 7.

**11.** A method for manufacturing a hot-stamping formed component, comprising subjecting a steel sheet with a pre-coated layer according to claim 10 to a hot stamping treatment.

**12.** The method of claim 11, wherein the hot stamping treatment is performed at conditions of:
a heating temperature between 880°C to 940°C, a heating period of 180 to 240 seconds, a hot-forming temperature between 680°C to 720°C, a pressure-holding period of 8 to 10 seconds, a cooling rate of 40°C/s to 60°C/s after the hot stamping treatment, and an ejection temperature of 200°C or below.

**13.** A hot-stamping formed component manufactured by the method according to claim 11.

**14.** The hot-stamping formed component of claim 13, wherein the hot-stamping formed component is of a yield strength of 1250 MPa, a tensile strength ≥ 2000 MPa, a ratio of elongation ≥ 5%, and a VDA ≥ 40°,
preferably, wherein the hot-stamping formed component is of a yield strength of 1350 MPa, a tensile strength ≥ 2100 MPa, a ratio of elongation ≥ 6%, and a VDA ≥ 45°.

**15.** An automotive structural component, comprising a hot-stamping formed component according to claim 13.

20μm

Fig.1

2500
2000
1500
1000
500
0
Stress /MPa
0
1
2
3
4
5
6
7
8
Strain /%
Example 1
Example 2
Example 9

Fig.2

8000
6000
4000
2000
0
Load /N
0
1
2
3
4
5
6
Displacement /mm
Example 1
Example 2
Example 9

Fig.3

# EUROPEAN SEARCH REPORT

Application Number
EP 25 19 7424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/104279 A1 (IRONOVATION MATERIALS TECH CO LTD [CN]; UNIV NORTHEASTERN [CN]) 23 May 2024 (2024-05-23) * table 1 * | 1-15 | INV. C22C38/02 C22C38/04 C22C38/06 C22C38/12 C22C38/16 C22C38/18 |
| A | CN 114 369 758 A (FIRST STEEL GROUP LTD COMPANY ET AL.) 19 April 2022 (2022-04-19) * tables 1-4 * | 1-15 | |
| A | CN 113 953 346 A (SHOUGANG GROUP CO LTD) 21 January 2022 (2022-01-21) * table 1 * | 1-15 | |
| A | WO 2024/122122 A1 (NIPPON STEEL CORP [JP]) 13 June 2024 (2024-06-13) * table 1 * | 1-15 | |
| A | WO 2004/065646 A1 (JFE STEEL CORP [JP]; OMORI YASUHIRO [JP] ET AL.) 5 August 2004 (2004-08-05) * table 1 * | 1-15 | TECHNICAL FIELDS SEARCHED (IPC) |
| A | EP 4 324 950 A1 (THYSSENKRUPP STEEL EUROPE AG [DE]) 21 February 2024 (2024-02-21) * paragraphs [0086] - [0089]; tables 1,3 * | 7-15 | C22C C21D |

The present search report has been drawn up for all claims

| Place of search | Date of completion of the search | Examiner |
|---|---|---|
| Munich | 8 January 2026 | Badcock, Gordon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 19 7424

This annex lists the patent family members relating to the patent documents cited in the above-mentioned European search report. The members are as contained in the European Patent Office EDP file on
The European Patent Office is in no way liable for these particulars which are merely given for the purpose of information.

08-01-2026

| Patent document cited in search report | Publication date | Patent family member(s) | Publication date |
|---|---|---|---|
| WO 2024104279 A1 | 23-05-2024 | CN 115478227 A | 16-12-2022 |
| | | CN 118028702 A | 14-05-2024 |
| | | EP 4613900 A1 | 10-09-2025 |
| | | JP 2025541545 A | 19-12-2025 |
| | | KR 20250109212 A | 16-07-2025 |
| | | WO 2024104279 A1 | 23-05-2024 |
| CN 114369758 A | 19-04-2022 | NONE | |
| CN 113953346 A | 21-01-2022 | NONE | |
| WO 2024122122 A1 | 13-06-2024 | CN 120322579 A | 15-07-2025 |
| | | EP 4632085 A1 | 15-10-2025 |
| | | JP WO2024122122 A1 | 13-06-2024 |
| | | KR 20250093407 A | 24-06-2025 |
| | | WO 2024122122 A1 | 13-06-2024 |
| WO 2004065646 A1 | 05-08-2004 | EP 1584701 A1 | 12-10-2005 |
| | | KR 20050061476 A | 22-06-2005 |
| | | TW I254654 B | 11-05-2006 |
| | | US 2006162823 A1 | 27-07-2006 |
| | | WO 2004065646 A1 | 05-08-2004 |
| EP 4324950 A1 | 21-02-2024 | CN 119731361 A | 28-03-2025 |
| | | EP 4324950 A1 | 21-02-2024 |
| | | WO 2024038037 A1 | 22-02-2024 |

EPO FORM P0459

For more details about this annex : see Official Journal of the European Patent Office, No. 12/82